Europäisches Patentamt

European Patent Office

Office européen des brevets

(19)

(11) Publication number: **0 253 251 B1**

## EUROPEAN PATENT SPECIFICATION

(12)

(45) Date of publication of patent specification: **15.09.93**　(51) Int. Cl.⁵: **C09D 4/06**, C08L 33/06

(21) Application number: **87109672.3**

(22) Date of filing: **06.07.87**

(54) **Thermosetting compositions comprising acrylic polymers which are substantially free of active hydrogens.**

(30) Priority: **11.07.86 US 884345**

(43) Date of publication of application:
**20.01.88 Bulletin 88/03**

(45) Publication of the grant of the patent:
**15.09.93 Bulletin 93/37**

(84) Designated Contracting States:
**DE ES FR GB IT**

(56) References cited:
**EP-A- 0 029 597**
**EP-A- 0 114 909**
**EP-A- 2 378 365**

(73) Proprietor: **PPG INDUSTRIES, INC.**
**One PPG Place**
**Pittsburgh Pennsylvania 15272(US)**

(72) Inventor: **Boston, Russel Elliott**
**525 Grove Road**
**Verona, PA. 15147(US)**
Inventor: **Kapp, David Charles**
**700 Westwood Drive**
**Gibsonia, PA. 15044(US)**

(74) Representative: **Sternagel, Hans-Günther, Dr. et al**
**Patentanwälte Dr. Michael Hann Dr. H.-G.**
**Sternagel Sander Aue 30**
**D-51465 Bergisch Gladbach (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

EP 0 253 251 B1

**Description**

Background of the Invention

Field of the Invention: The present invention relates to thermosetting compositions containing acrylic copolymers. More specifically, the present invention relates to thermosetting compositions containing acrylic polymers which are substantially free of active hydrogens.

Brief Description of the Prior Art: Generally, coating compositions containing acrylic polymers and melamine curing agents are known in the art. In the art-known compositions, however, the acrylic polymers contain active hydrogen groups which interact with the melamines in order to effect crosslinking. To provide coating compositions that would cure effectively, that is, coatings that are hard and solvent resistant, predominant amounts of melamine resins are used in combination with acrylic polymers containing active hydrogen groups such as hydroxyl groups. While hard and solvent-resistant coatings are provided thereby, many of these coatings are found to be lacking in drawability.

In the area of can coating in particular, it is necessary to have coatings that are conjointly hard and drawable. This has become all the more necessary with the advent of cans having complex shapes. Coatings therefor must be such as would contour these shapes without loss of adhesion when the coated substrate is drawn. As would be realized, there is therefore a need for coating compositions containing acrylic polymers which will cure to provide coatings which are at the same time drawable and have good film integrity. The present invention provides such coatings.

US-A-2,378,365 discloses coating compositions containing polymeric methyl methacrylate and a melamin formaldehyde resin which has been reacted with an alcohol containing 4 to 8 carbon atoms.

EP-A-0,029,598 relates to aqueous coating compositions which comprise acrylic polymers based on methylmethacrylate, butyl acrylate, hydroxyethyl acrylate and acrylic or methacrylic acid and further comprise an alkylated melamine formaldehyde resin.

EP-A-0,114,909 describes an aqueous dispersed thermosetting composition comprising a high Tg acrylic polymer, melamine formaldehyde resins, including alkylated melamine formaldehyde resins, and a fluorocarbon polymer.

All three references are concerned with improving properties which are typical of coatings used in the automotive industry, such as ultraviolet light resistance, saltspray resistance and outdoor durability. They do not disclose or suggest can coatings meeting the above-mentioned desirabilities.

Summary of the Invention

The present invention encompasses a coating composition comprising:
(1) 15 to 75 weight percent of an acrylic polymer substantially unable to cross-link during curing and having a Tg of 65°C or higher, a molecular weight, based on polystyrene standards, of from 5,000 to 40,000 and a hydroxyl group containing monomer content of less than 2 weight percent, and
(2) 25 weight percent or less of an aminoplast or phenoplast to provide a cure of the coating composition,
the percentages of the acrylic polymer (1) and of the aminoplast or phenoplast (2) being based on the total resin solids of the coating composition.

The present invention further encompasses a process for preparing a coated fabricated substrate by applying to the substrate the above coating composition, followed by baking the coated substrate to a temperature sufficient to effect cure of the coating composition. The present invention finally encompasses the coated fabricated substrates prepared in accordance with the said process.

Surprisingly it has been found that even though the acrylic polymers used contain less than 2 weight percent hydroxyl group containing monomer and therefore are substantially unable to cross-link, and even though the melamine resins are used in relatively small amounts, coating compositions containing the same, upon heating, cure to produce coatings that are drawable and at the same time have good film integrity in that the coatings are hard and have good solvent resistance and other desirable film properties.

Detailed Description of the Invention

The principal ingredients of the coating compositions of this invention are the acrylic polymers having a high Tg which are substantially free of cross-linkable active hydrogen groups which typically comprise hydroxy groups, and the aminoplasts or phenoplasts. The high Tg acrylic polymer can be prepared by free radical addition polymerization of ethylenically unsaturated monomers which are selected on the basis that

2

(1) the resultant copolymer has a Tg greater than about 65°C. and preferably greater than about 100°C. and (2) that the resultant polymer is substantially free of crosslinking active hydrogen groups. A typical example of a high Tg copolymerizable monomer is methyl methacrylate. Other high Tg acrylic monomers can be acrylic or methacrylic acid esters of cyclic or polycyclic alcohols. Examples thereof can be isobornyl acrylate and isobornyl methacrylate, acrylic acid or methacrylic acid ester of a cyclic alcohol such as cyclohexanol; vinyl monomers such as styrene, vinyl toluene, and the like. In an illustrative embodiment of this invention, methyl methacrylate can be copolymerized with other monomers, the selection of which is based on specific property or properties that these other monomers impart to the resultant copolymer. The Tg referred to herein is the calculated glass transition temperature of the acrylic polymer.

In selecting the other copolymerizable monomers, it can be advantageous to employ those that at once impart high Tg as well as other desirable properties. Consonantly, methyl methacrylate can be employed with acrylic acid which is a high Tg monomer and which can at the same time provide water-solubilizing groups.

The acrylic polymer can be prepared by conventional free radical initiated solution polymerization techniques in which the acrylic monomers are dissolved in a solvent or mixture of solvents and polymerized in the presence of a free radical initiator until the desired molecular weight is obtained.

Examples of free radical initiators are those which are soluble in the polymerization medium such as azobisisobutyronitrile, azobis(alpha, gamma-dimethylvaleronitrile), tertiary-butyl perbenzoate, tertiary-butyl peracetate and benzoyl peroxide.

Optionally chain transfer agents such as alkyl mercaptans such as tertiary-dodecyl mercaptan; ketones such as methyl ethyl ketone, and chlorohydrocarbons such as chloroform can be used.

Usually, the solvent is first heated to reflux and the mixture of acrylic monomers containing the free radical initiator added slowly to the refluxing solvent. After addition, additional catalyst is optionally added and the reaction mixture held at polymerizing temperatures so as to reduce the free monomer content of the reaction mixture.

For water-based compositions, water-miscible solvents are used in the polymerization. Examples include the monoalkyl ethers of ethylene glycol which contain from 1 to 4 carbon atoms in the alkyl group such as ethylene glycol monoethyl ether and ethylene glycol monobutyl ether. Examples of other suitable water-miscible solvents are isopropanol and diacetone alcohol. Mixtures of solvents including mixtures of water-miscible solvents with water can also be used.

For water-based compositions, the acrylic polymer contains a solubilizing or dispersing group such as a carboxyl group which can be at least partially neutralized with a base. An example of the base can be an alkali metal hydroxide or preferably an organic amine. Suitable amines are water-soluble amines including primary, secondary and tertiary amines including hydroxylamines. Examples include ethanolamine, diethanolamine, N-methylethanolamine, dimethylethanolamine, methylamine, ethylamine, diethylamine, trimethylamine, triethylamine, morpholine and ammonia.

The base-neutralized acrylic polymer can be solubilized or dispersed in water. Alternate means of solubilizing or dispersing the acrylic polymer or otherwise making it compatible with water is intended to be encompassed by this invention.

The acrylic polymers of this invention are preferably of low molecular weight. The molecular weight is typically from about 5000 to 40,000 and preferably 8000 to 20,000. The molecular weight is based on polystyrene standards.

The aminoplasts useful herein are aldehyde condensation products of melamine, benzoguanamine, urea or similar compounds. Generally, the aldehyde employed is formaldehyde, although useful products can be made from other aldehydes such as acetaldehyde, crotonaldehyde, acrylene, benzaldehyde, furfuryl and others. Condensation products of melamine, urea or benzoguanamine are most common and are preferred, but products of other amines and amides in which at least one amino group is present can be employed. For example, such condensation products can be produced from various diazines, triazoles, guanidines, guanamines and alkyl and dialkyl-substituted derivatives of such compounds including alkyl and aryl-substituted ureas and alkyl and aryl-substituted melamines and benzoguanamines. Examples of such compounds are N,N-dimethylurea, N-phenylurea, dicyandiamide, formoguanamine, acetoguanamine, 6-methyl-2,4-diamino-1,3,5-triazine, and the like.

These amine-aldehyde and amide-aldehyde condensation products can contain methylol groups or similar alkylol groups depending upon the particular aldehyde employed. If desired, these methylol groups can be etherified by reaction with an alcohol. Various alcohols are employed for this purpose including essentially any monohydric alcohol, although the preferred alcohols contain from 1 to 4 carbon atoms such as methanol, ethanol, isopropanol and n-butanol.

3

In the practice of this invention as a coating composition, the acrylic polymer and the aminoplast or phenoplast resin can be employed in amounts sufficient to impart to the coating composition the conjoint properties of drawability and film integrity. Typically, resinous adjuncts such as polyester polyols, polyether polyols, alkyds, functional acrylic polymers or a mixture thereof are employed therewith. The resinous adjuncts are selected on the basis of cost and properties such as flow, viscosity and the like. It is of note that the resinous adjuncts may contain active hydrogen groups which may crosslink with the aminoplast or phenoplast. Hence, the amounts in which the acrylic polymers and/or the aminoplasts or phenoplasts are employed generally depend on the types and amounts of the resinous adjuncts that are present. Generally, the acrylic polymer is employed in amounts of 15 to 75 percent by weight, and preferably 18 to 35 percent by weight based on total resin solids of the coating composition. The aminoplast or phenoplast is employed in amounts of about 25 percent or less and preferably 10 to 20 percent by weight based on the total resin solids of the composition.

Also contained in the coating composition can be additives such as flow control agents, adhesion promoters, cure catalysts and the like. The coating compositions of this invention can be prepared by blending the acrylic polymer, the aminoplast and other coating additives, and adjuncts thoroughly.

The coating composition can be applied directly to substrates such as aluminum, steel or the like by means such as roll-coating. Also, the coating compositions can be applied as clear coatings over pigmented base coats which can be in the form of ink patterns on can coatings. The coated substrates are cured by, say, baking to a temperature sufficient to effect such cure. Typically, the coated substrates are baked at peak metal temperatures of about 350°F. (177°C) to 400°F. (204°C.).

The cured coatings are drawable and pasteurizable after they have been drawn. Drawability which is a measure of fabricating property is measured by the first stage screw-cap method which is as follows. Using a force of about 15 tons, flat nosed cups of about 2.7 centimeters diameter are deep drawn to about 0.9 centimeters rise on a Swift cupping press starting from various blanks of aluminum panels coated directly with the compositions of this invention or coated over inks. Good drawability is exhibited when there is no cracking and/or loss of adhesion of the coating on the side of the cap, upon visual inspection.

The cured coatings have good film integrity in that they have good pencil hardness, and good solvent resistance which can be evaluated by methyl ethyl ketone double-rubs with a cloth which has been wet with methyl ethyl ketone and used to rub across the surface of the cured coating until the integrity of the film is affected.

These and other aspects of the present invention are further illustrated by the following non-limiting examples.

Example 1

This example illustrates the coating compositions of this invention.

| Ingredients* | Parts by Weight (grams) |
|---|---|
| RESIMINE 747[1] | 16 |
| Non-functional acrylic polymer[2] | 33 |
| Resinous adjuncts | 38 |

[1]Melamine resin, available from Monsanto Co.

[2]Derived from 88 percent methyl methacrylate and 12 percent methacrylic acid, having a Tg of 125°C. and molecular weight of 9100.

*In formulating the coating composition, the above ingredients were thoroughly blended and typical coating additives such as acid catalysts, flow control agents and the like were added where needed.

The above coating composition was applied to panels of aluminum substrate by roll-coating and baked at 400°F. (204°C.) for 90 seconds. The cured coatings were hard in that up to 50 methyl ethyl ketone double-rubs did not remove the film. The cured coating had very good fabricating property in that it exhibited good drawability.

4

Example 2

This example also illustrates the coating compositions of this invention and methods of preparing and using the same.

The coating composition was formulated in essentially the same manner as described in Example 1, except that there was employed an additional acrylic polymer which was hydroxy-functional.

| Ingredients | Percent Composition |
|---|---|
| RESIMINE 747 | 16 |
| Non-functional acrylic polymer[1] | 29 |
| Hydroxy-functional acrylic polymer[2] | 4 |
| Resinous adjuncts | 48 |

[1] Same as in Example 1.

[2] Derived from 39% butyl acrylate/11% acrylic acid/27% methyl methacrylate/5% styrene/5% butyl methacrylate/5% hydroxyethyl acrylate and having a Tg of 36°C. and molecular weight of 18,000 to 20,000.

The coating was roll-coated, cured and evalutated as described in Example 1, with the following results. The cured coating was hard in that up to 25 methyl ethyl ketone double-rubs did not affect film integrity.

Example 3 (CR-2792-26A&B)

This example further illustrates the coating compositions of this invention and methods of preparing and using the same in comparison with coating compositions containing hydroxy-functional acrylic polymers.

| | Parts by Weight (grams) | |
|---|---|---|
| Ingredient | Test Composition | Comparative Composition |
| Resinous polyols | 20 | 20 |
| RESIMINE 747 | 15 | 15 |
| Hydroxy-functional acrylic polymer[1] | -- | 226.8 |
| Hydroxy-free acrylic polymer[2] | 226.8 | -- |
| Dimethylethanolamine | 1.0 | 1.0 |
| Deionized water | 47.9 | 47.9 |

[1] Derived from 73% methyl methacrylate/12% methacrylic acid/10% hydroxyethyl acrylate/5% styrene.

[2] 83% methyl methacrylate/12% methacrylic acid/5% styrene.

The coating compositions were prepared and applied in essentially the same manner as described in Example 1. Coated panels were baked at 400°F. (204°C.) for 90 seconds. The cured coating was evaluated with the following results:

|                                | Test | Control |
|--------------------------------|------|---------|
| Pencil Hardness                | 5H   | 5H      |
| Methyl ethyl ketone double rubs | 50+  | 50+     |
| Fabrication Properties on:     |      |         |
| Bare aluminum                  | 1    | 1-2     |
| Red ink                        | 1-2  | 3-4     |
| White ink                      | 1-2  | 3-4     |

On a scale of 1 to 10 with 1 being rated best and 10 worst, the above showed the coating compositions of this invention are well suited to coating bare aluminum panels and inked panels to provide highly desired fabricability.

## Claims

1. A coating composition comprising :
   (1) 15 to 75 weight percent of an acrylic polymer substantially unable to cross-link during curing and having a Tg of 65°C or higher, a molecular weight, based on polystyrene standards, of from 5,000 to 40,000 and a hydroxyl group containing monomer content of less than 2 weight percent, and
   (2) 25 weight percent or less of an aminoplast or phenoplast to provide a cure of the coating composition,
   the percentages of the acrylic polymer (1) and of the aminoplast or phenoplast (2) being based on the total resin solids of the coating composition.

2. A coating composition of Claim 1, wherein the acrylic polymer (1) has a Tg of 100°C or higher.

3. A coating composition of Claims 1 or 2 wherein the acrylic polymer (1) has a molecular weight, based on polystyrene standards, of from 8,000 to 20,000.

4. A coating composition of any of Claims 1 to 3 wherein the acrylic polymer (1) contains carboxylic groups.

5. A coating composition of any of Claims 1 to 4 which further contains adjuncts selected from the group consisting of alkyds, polyesterpolyols, polyetherpolyols, functional acrylic polymers or a mixture thereof.

6. A coating composition of Claim 5 wherein the adjunct contains an active hydrogen group.

7. A process for preparing a coated fabricated substrate by applying to the substrate a coating composition, followed by baking the coated substrate to a temperature sufficient to effect cure of the coating composition,
   **characterized in that** the coating composition comprises
   (1) 15 to 75 weight percent of an acrylic polymer substantially unable to cross-link during curing and having a Tg of 65°C or higher, a molecular weight, based on polystyrene standards, of from 5.000 to 40,000, and a hydroxyl group containing monomer content of less than 2 weight percent, and
   (2) 25 weight percent or less of an aminoplast or phenoplast to provide a cure of the coating composition,
   the percentages of the acrylic resin (1) and of the aminoplast or phenoplast (2) being based on the total resin solids of the coating composition.

## Patentansprüche

1. Beschichtungsmittel, enthaltend
   (1) 15 bis 75 Gewichtsprozent eines Acrylpolymeren, das im wesentlichen bei der Härtung nichtvernetzend ist und eine Tg von 65°C oder höher, ein Molekulargewicht, bezogen auf Polystyrol-

EP 0 253 251 B1

Standard, von 5.000 bis 40.000 sowie einen Gehalt an Hydroxylgruppen enthaltenden Monomeren von weniger als 2 Gewichtsprozent aufweist, und
(2) 25 Gewichtsprozent oder weniger eines Aminoplast- oder Phenoplast-Harzes zur Härtung des Beschichtungsmittels,
wobei sich die Prozentangaben für das Acrylpolymere (1) und das Aminoplast- oder Phenoplast-Harz (2) auf den gesamten Feststoffgehalt des Beschichtungsmittels beziehen.

2. Beschichtungsmittel nach Anspruch 1, worin das Acrylpolymere (1) eine Tg von 100°C oder höher aufweist.

3. Beschichtungsmittel nach den Ansprüchen 1 oder 2, worin das Acrylpolymere (1) ein Molekulargewicht, bezogen auf Polystyrol-Standard, von 8.000 bis 20.000 aufweist.

4. Beschichtungsmittel nach jedem der Ansprüche 1 bis 3, worin das Acrylpolymere (1) Carboxylgruppen enthält.

5. Beschichtungsmittel nach jedem der Ansprüche 1 bis 4, weiterhin enthaltend einen Zusatzstoff, ausgewählt aus der Gruppe, bestehend aus Alkydharzen, Polyesterpolyolen, Polyetherpolyolen, funktionalen Acrylpolymeren und Gemischen dieser Stoffe.

6. Beschichtungsmittel nach Anspruch 5, worin der Zusatzstoff eine Gruppe mit aktivem Wasserstoff enthält.

7. Verfahren zum Beschichten von Substraten, indem man auf die Substrate ein Beschichtungsmittel aufbringt und das beschichtete Substrat auf eine Temperatur erhitzt, die eine genügende Härtung des Beschichtungsmittels bewirkt, dadurch gekennzeichnet, das das Beschichtungsmittel enthält:
(1) 15 bis 75 Gewichtsprozent eines Acrylpolymeren, das im wesentlichen bei der Härtung nichtvernetzend ist und eine Tg von 65°C oder höher, ein Molekulargewicht, bezogen auf Polystyrol-Standard, von 5.000 bis 40.000 sowie einen Gehalt an Hydroxylgruppen enthaltenden Monomeren von weniger als 2 Gewichtsprozent aufweist, und
(2) 25 Gewichtsprozent oder weniger eines Aminoplast- oder Phenoplast-Harzes zur Härtung des Beschichtungsmittels,
wobei sich die Prozentangaben für das Acrylpolymere (1) und das Aminoplast- oder Phenoplast-Harz (2) auf den gesamten Feststoffgehalt des Beschichtungsmittels beziehen.

**Revendications**

1. Composition de revêtement comprenant :
(1) 15 à 75 % en poids d'un polymère acrylique essentiellement non susceptible de réticuler pendant le durcissement et ayant une Tg de 65°C ou supérieure, un poids moléculaire, exprimé par rapport à des étalons de polystyrène, de 5 000 à 40 000 et une teneur en monomères contenant un groupe hydroxyle de moins de 2 % en poids, et
(2) 25 % en poids ou moins d'un aminoplaste ou d'un phénoplaste pour procurer un durcissement de la composition de revêtement,
les pourcentages du polymère acrylique (1) et de l'aminoplaste ou du phénoplaste (2) étant exprimés par rapport à la totalité des matières solides de résine de la composition de revêtement.

2. Composition de revêtement selon la revendication 1, dans laquelle le polymère acrylique (1) a une Tg de 100°C ou supérieure.

3. Composition de revêtement selon la revendication 1 ou 2, dans laquelle le polymère acrylique (1) a un poids moléculaire, exprimé par rapport à des étalons de polystyrène, de 8 000 à 20 000.

4. Composition de revêtement selon l'une des revendications 1 à 3, dans laquelle le polymère acrylique (1) contient des groupes carboxyliques.

5. Composition de revêtement selon l'une quelconque des revendications 1 à 4, qui contient de plus des adjuvants choisis dans le groupe consistant en alkydes, polyesterpolyols, polyétherpolyols, polymères

7

acryliques fonctionnels ou un mélange de ceux-ci.

6. Composition de revêtement selon la revendication 5, dans laquelle l'adjuvant contient un groupe à hydrogène actif.

7. Procédé pour préparer un substrat muni d'un revêtement en appliquant sur le substrat une composition de revêtement, puis en cuisant le substrat revêtu à une température suffisante pour effectuer le durcissement de la composition de revêtement, caractérisé en ce que la composition de revêtement comprend

(1) 15 à 75 % en poids d'un polymère acrylique essentiellement non susceptible de réticuler pendant le durcissement et ayant une Tg de 65°C ou supérieure, un poids moléculaire, exprimé par rapport à des étalons de polystyrène, de 5 000 à 40 000 et une teneur en monomères contenant un groupe hydroxyle de moins de 2 % en poids, et

(2) 25 % en poids ou moins d'un aminoplaste ou d'un phénoplaste pour procurer un durcissement de la composition de revêtement,

les pourcentages de la résine acrylique (1) et de l'aminoplaste ou du phénoplaste (2) étant exprimés par rapport à la totalité des matières solides de résine de la composition de revêtement.